# EUROPEAN PATENT APPLICATION

(11) **EP 4 603 243 A2**
(43) Date of publication of application: **20.08.2025**
(21) Application number: 25185881.7
(22) Date of filing: 27.11.2019
(51) Int. Cl.: B26D 7/20

(54) **CONTAINER FORMING MACHINE WITH A PRE-CUTTING SYSTEM**

(62) Divisional of application: 19000535.5
(71) Applicant: Industrias Tecnológicas de Mecanización y Automatizaciòn, S.A., 08960 Sant Just Desvern (Barcelona) (ES)
(72) Inventor: GONZALEZ, Manuel, 08960 SANT JUST DESVERN / BARCELONA (ES)
(74) Representative: Maldonado Jordan, Julia

(57) **Abstract**

A container forming machine (5) equipped with a pre-cutting system, providing intermittent advances to a multi-layer and/or single-layer material (3) with a length according to an advance step of the machine and the pre-cutting system being suitable for making a lower pre-cut (32) on the lower surface and an upper pre-cut (32) on the upper surface of the multilayer and/or single-layer material (3). The container forming machine comprises a lower pre-cutting device (1) and an upper pre-cutting device (2), provided with respective lower (11) and upper (21) blades having relative vertical movement with respect to the multilayer and/or single-layer material (3); and wherein the lower pre-cutting device (1) and the upper pre-cutting device (2) are separated in the advance direction of the multilayer and/or single-layer material (3) at a length equal to a multiple of the advance step of the machine.

## Description

### Technical field

This invention refers to a container forming machine, mainly intended for packaging food products, and configured to provide intermittent advances to a multi-layer and/or single-layer container material with a length according to an advance step of the machine. The container forming machine is equipped with a system carrying out a pre-cut on the lower surface and a pre-cut on the upper surface of the multilayer and/or single-layer container material in order to subsequently facilitate the separation of the containers of a single pack.

### Background art

When manufacturing containers made of multilayer material, in particular container packs for the food industry, it is common to make pre-cutting lines on the contours of the containers that affect a part of the thickness of the multilayer material and the aim of which is to facilitate the subsequent manual tearing and separation of the pack containers by the end consumer.

In containers made with single-layer or bilayer plastic material, making the pre-cutting line on the upper surface of the material is sufficient to allow for the subsequent tearing and separation of the containers of the pack by the user.

When multilayer materials are used, this upper pre-cutting line is insufficient for guaranteeing a proper separation of the containers of the pack without producing defects in the area of the tear.

To prevent said drawbacks, in the EP 3566832 A1 a solution was developed that consists of a container pre-cutting device that comprises: a punch plate provided with upper blades to make the upper pre-cutting line, and a die plate that comprises lower blades facing the upper blades, so that when the punch plate closes on the die plate, the upper blades and the lower blades simultaneously define upper and lower pre-cutting lines on opposite faces of the multilayer material of the containers, thereby guaranteeing a proper tear of the multilayer material along said pre-cutting lines.

This solution is effective for making the upper and lower pre-cuts at the same time; however, depending on the mechanical characteristics of the materials that make up the different layers of the multilayer material, this simultaneity of the upper and lower pre-cuts, which are very close to one another, can cause stress in the multilayer material, by which neither the upper nor the lower pre-cuts are cut, leading to undesirable tears of the multilayer material in said area, either prior to or during the separation of the containers.

WO2019/171242 A1 discloses an automatic incision station for making a plurality of weaknesses on a plurality of respective portions of web, for producing a plurality of packages, wherein each of the weaknesses comprises a respective first incision located on the first face of a respective portion and a respective second incision located on the second face of the same respective portion and wherein the incision station comprises a plurality of incision units each of which configured for performing a respective operating sequence and further comprising a control system configured for automatically controlling each incision unit independently from the other incision units.

### Description of the invention

The present invention refers to a container forming machine comprising a pre-cutting system according to claim 1. Preferred embodiments are detailed in the dependent claims.

The referred pre-cutting system is applicable to multilayer and/or single-layer container forming machines, configured to cause intermittent advances in the multilayer and/or monolayer material with a length according to an advance step of the machine; and has suitable technical features for making a lower pre-cut and an upper pre-cut in the facing areas of the lower and upper surfaces in two phases, meaning successively, not simultaneously, making both the lower and upper pre-cuts in an advance of the multilayer and/or single-layer material of a predetermined length, thereby eliminating the stresses produced in the multilayer and/or single-layer material by making the simultaneous upper and lower pre-cuts.

Therefore, the pre-cutting system of this container forming machine is especially ideal for pre-cutting multipack containers made of different materials (PET, PP, PLA and PS).

To this end, and according to the invention, the container pre-cutting system of the proposed container forming machine comprises a lower pre-cutting device and an upper pre-cutting device, provided with respective lower and upper blades, having relative vertical movement with respect to the multilayer and/or single-layer material; and wherein said lower and upper pre-cutting devices are separated in the advance direction of the multilayer and/or single-layer material by a length equal to a multiple of the advance step of the container forming machine.

This movement of the multilayer and/or single-layer material between the lower and upper pre-cutting devices of the container forming machine makes it so between the upper and lower pre-cuts, the multilayer and/or single-layer material releases the stress produced during the first pre-cut, preventing the stresses from accumulating during the second pre-cut that is very close to the prior pre-cut.

According to the invention, the lower pre-cutting device comprises: a vertically movable lower die, holding the lower blade; and an upper floating stop, mounted on calibrated springs on a punch plate and against which the multilayer and/or single-layer material is moved by the lower die, during the lower pre-cutting of said multilayer and/or single-layer material.

Furthermore, the upper pre-cutting device comprises: a lower die and an upper blade mounted with the possibility of relative vertical movement with respect to a floating stop in turn provided with limited vertical movement with respect to a punch plate; said upper blade being mounted on calibrated springs.

According to one embodiment of the invention the upper and lower pre-cutting devices are defined in independent tools, installed on different presses. which can be a current form, fill and seal machine, for example, also known as FFS machines.

Lastly, it is worth mentioning that the order of the upper and lower pre-cutting devices in relation to the advance direction of the multilayer and/or single-layer material is not important, the system of the container forming machine being able to first make the lower pre-cut and then the upper pre-cut, or vice versa, given that it does not affect the essence of the invention.

### Brief description of the content of the drawings

As a complement to the description being made, and for the purpose of helping to make the features of the invention more readily understandable, this specification is accompanied by a set of drawings which, by way of illustration and not limitation, represent the following.
- Figure 1 shows a schematic elevation view of an exemplary embodiment of the container pre-cutting system of the container forming machine according to the invention, wherein the lower pre-cutting device and the upper pre-cutting device can be seen longitudinally separated in the advance direction of containers formed in a sheet of multilayer and/or single-layer material.
- Figure 2 shows an elevation view of the lower pre-cutting device, wherein the lower blade is fixed to the lower die; and a detailed enlargement of the pre-cutting area of the same.
- Figure 3 shows a detailed enlargement of an alternative embodiment variant of the lower pre-cutting device, wherein the lower blade is machined in the lower die itself.
- Figure 4 shows an elevation view of the upper pre-cutting device and a detailed enlargement of the pre-cutting area of the same.
- Figures 5 and 6 schematically show different mounting embodiments of the upper and lower pre-cutting devices with respect to a container forming machine that can be a form, fill and seal machine (FFS machine).

### Detailed description of embodiments of the invention

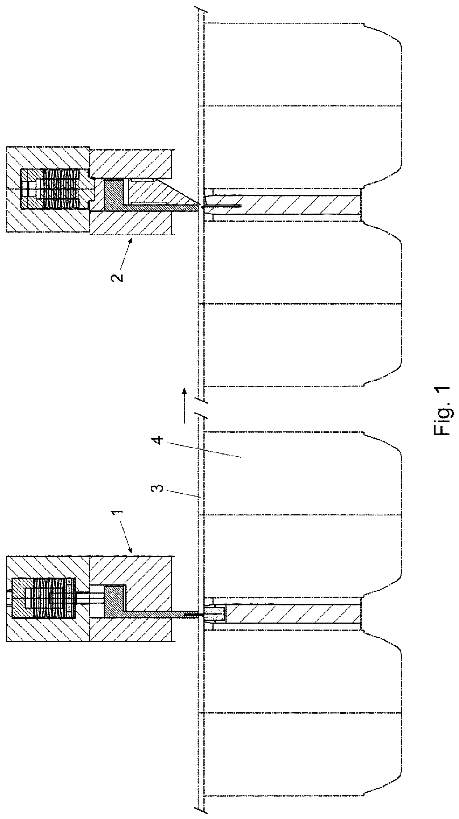

Figure 1 shows a container pre-cutting system intended to be mounted on a container forming machine (5) which, when actuated, make both pre-cuts in the lower surface and in the upper surface of a multilayer material (3) of a container (4).

It must be mentioned that in the aforementioned figure 1, the lower pre-cutting device (1) and the upper pre-cutting device (2) are in this order in the advance direction of the multilayer and/or single-layer material (3), although it could be arranged in the opposite order, since the order does not affect the operation of the pre-cutting system of the proposed container forming machine.

The lower pre-cut device (1) and upper pre-cut device (2) of the container forming machine are longitudinally separated in the advance direction of the multilayer material (3) by a length equal to a multiple of the advance step of the container forming machine, such that the lower and upper pre-cutting lines corresponding to the same area of multilayer and/or single-layer material (3) are not made simultaneously, but rather in two successive phases.

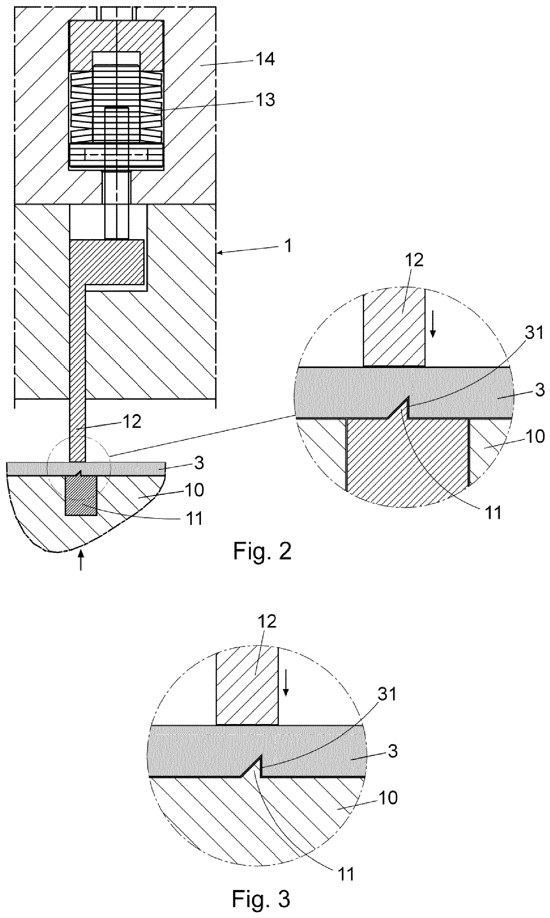

In the exemplary embodiment shown in figure 2, the lower pre-cutting device (1) comprises: a lower die (10), able to move vertically, to which a lower blade (11) is fixed; and an upper floating stop (12) mounted on calibrated springs (13) on a punch plate (14).

When the lower die (10) moves towards the upper area, as shown in figure 2, it pushes the multilayer material (3) against the upper floating stop (12), the lower blade (11) making a lower pre-cut (31) in the multilayer and/or single-layer material (3).

It is worth mentioning that the lower blade (11) can be fixed to the lower die (10) as shown in figure 2 or be directly machined on said lower die (10) as shown in the enlarged detail of figure 3.

To make a pre-cut facing the aforementioned lower pre-cut (31) in the upper surface of the multilayer and/or single-layer material (3), it is necessary for the multilayer and/or single-layer material to move a specific number of advance steps of the machine, until said area reaches the upper pre-cutting device (2).

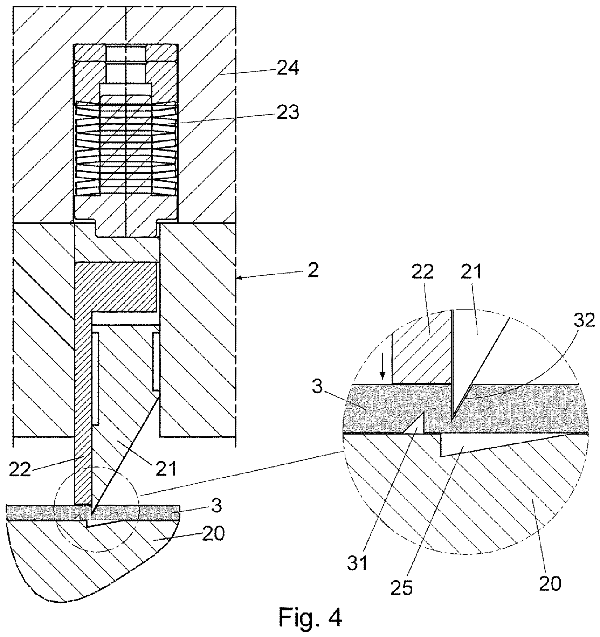

The upper pre-cutting device (2) shown in figure 4 comprises: a lower die (20) and an upper blade (21) mounted with the possibility of relative vertical movement with respect to a floating stop (22) in turn provided with limited vertical movement with respect to a punch plate (23); said upper blade (20) being mounted on calibrated springs (24).

When the upper pre-cutting device (2) is actuated, the floating stop (22) presses the multilayer and/or single-layer material (3) against the lower die (20) and the upper blade (21) penetrates the upper surface of the multilayer material (3), defining the upper pre-cut (32) in the same.

As can be seen in the detailed enlargement of figure 4, the lower pre-cut (31) and the upper pre-cut (32) are slightly separated in the advance direction of the multilayer material (3), the lower die (20) in the area facing the upper blade (21) having a recess (25) that allows for a certain elastic deformation of the multilayer sheet (3) when making the upper pre-cut (32), which contributes to reducing the stresses of the material in the pre-cutting area.

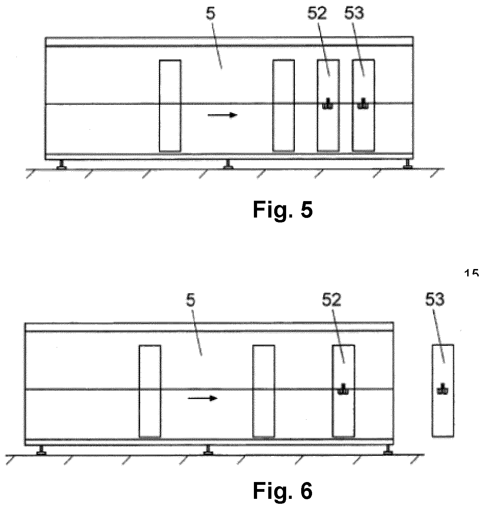

The lower pre-cutting device (1) and the upper pre-cutting device (2) are defined in two independent tools (52, 53) installed on different presses, situated either in the forming machine (5), as shown in figure 5, or one in the forming machine and another outside the same, as shown in figure 6.

In any case, the separation between the lower pre-cutting device (1) and the upper pre-cutting device (2) of the proposed container forming machine (5) is a multiple of the advance step of the container forming machine (5) so that the lower pre-cut (31) and the upper pre-cut (32) are in facing positions, as shown in figure 4.

Having sufficiently described the invention, in addition to an example of preferred embodiment, it is hereby stated for the relevant purposes that the materials, shape, size and layout of the described elements may be modified, provided that it does not imply altering the essential characteristics of the invention claimed below.

## Claims

1. A container forming machine with a pre-cutting system, the container forming machine (5) providing intermittent advances of multilayer and/or single-layer material of a length according to an advance step of the container forming machine (5); said pre-cutting system being suitable for making a lower pre-cut (32) on the lower surface and an upper pre-cut (32) on the upper surface of a multilayer or single-layer material (3), the container forming machine (5) comprising a lower pre-cutting device (1) and an upper pre-cutting device (2), provided with respective lower blades (11) and upper blades (21) having relative vertical movement with respect to the multilayer or single-layer material (3); **characterized in that** said lower pre-cutting device (1) and upper pre-cutting device (2) are:
- defined in two independent tools (52 53) installed on different presses, and
- separated in the advance direction of the multilayer and/or single-layer material (3) by a length that is a multiple of the advance step of the container forming machine so that the lower-precut 1) and the upper pre-cut (3) are in facing positions.

2. The container forming machine according to claim 1, wherein the two different presses (52, 53) are both placed in the container forming machine (5), or one arranged in the container forming machine (5) and the other outside the same.

3. The container forming machine according to claim 1 or claim 2, wherein the lower pre-cutting device (1) comprises: a vertically movable lower die (10), to which the lower blade (11) is fixed, or defined; and an upper floating stop (12), mounted on springs calibrated (13) on a punch plate (14) and against which the multilayer and/or single-layer material (3) is moved by the lower die (10), during the lower pre-cutting of said multilayer material (3).

4. The container forming machine according to claim 1 or claim 2, wherein the upper pre-cutting device (2) comprises: a lower die (20) and an upper blade (21) mounted with the possibility of relative vertical movement with respect to a floating stop (22) in turn provided with limited vertical movement with respect to a punch plate (23); said upper blade (21) being mounted on calibrated springs (24).
